Europäisches Patentamt

European Patent Office

Office européen des brevets

(11) Publication number: **0 324 147**
**A2**

## (12) EUROPEAN PATENT APPLICATION

(21) Application number: **88121434.0**

(22) Date of filing: **21.12.88**

(51) Int. Cl.⁴: **H04N 3/12 , G02B 6/04 , G09F 9/30**

(30) Priority: **11.01.88 JP 3477/88**
**14.01.88 JP 5902/88**
**19.01.88 JP 8897/88**
**25.01.88 JP 14253/88**
**26.01.88 JP 14833/88**
**26.08.88 JP 211636/88**

(43) Date of publication of application:
**19.07.89 Bulletin 89/29**

(84) Designated Contracting States:
**DE FR NL**

(71) Applicant: **SEIKO EPSON CORPORATION**
**4-1, Nishishinjuku 2-chome**
**Shinjuku-ku Tokyo-to(JP)**

(72) Inventor: **Sonehara, Tomio**
**c/o Seiko Epson Corporation 3-5, Owa**
**3-chome**
**Suwa-shi Nagao-ken(JP)**
Inventor: **Sugiyama, Jun**
**c/o Seiko Epson Corporation 3-5, Owa**
**3-chome**
**Suwa-shi Nagao-ken(JP)**
Inventor: **Morozumi, Shinji**
**c/o Seiko Epson Corporation 3-5, Owa**
**3-chome**
**Suwa-shi Nagao-ken(JP)**

(74) Representative: **Blumbach Weser Bergen**
**Kramer Zwirner Hoffmann Patentanwälte**
**Radeckestrasse 43**
**D-8000 München 60(DE)**

(54) **Light guide type display apparatus.**

(57) A light guide type display apparatus has optical fibers (103) that optically couple together a light shutter (104) which serves as an image forming device and a display screen, the optical fibers being effectively interlaced with each other, so that the boundaries between the blocks (101) of the screen are only slightly observable and therefore a uniform and high-quality display is obtained. It is possible to reduce the amount of fibers used and hence lower the cost of the system as well as reduce the size (thickness) and weight of the apparatus by forming a display screen from a plurality of units.

FIG. 1

## LIGHT GUIDE TYPE DISPLAY APPARATUS

### BACKGROUND OF THE INVENTION

1. Field of the Invention

The present invention relates to a light guide type display apparatus.

2. Description of the Related Art

A typical conventional light guide type display apparatus has heretofore been arranged such that a plurality of blocks each formed by bundling optical fibers are simply stacked up to constitute a display screen, as disclosed in US-A-4,650,280.

The conventional light guide type display apparatus suffers, however, from the disadvantage that the overall length of optical fibers used is considerably long and therefore the production cost of the apparatus is unfavorably high. In addition, boundaries which are generated on the display screen due to discontinuity between the blocks or unevenness of luminance may be undesirably seen in the form of linear patterns, which degrades the quality of the displayed image.

### SUMMARY OF THE INVENTION

Under these circumstances, it is an primary object of the present invention to provide a light guide type display apparatus which is designed so that the overall length of fibers used is reduced and it is possible to obtain a uniform and high-quality display.

This object is achieved with a light guide type display as claimed.

According to one aspect, the present invention provides a light guide type display apparatus wherein optical fibers for optically coupling together a light shutter which serves as an image forming means and a display screen are effectively interlaced with each other.

According to another of its aspects, the present invention provides a light guide type display apparatus wherein a screen is formed from a plurality of image forming means.

According to another of its aspects, the present invention provides a light guide type display apparatus which comprises a plurality of units each including image forming means and optical fibers for optically coupling together the image forming means and a display screen.

According to another of its aspects, the present invention provides a light guide type display apparatus which has luminance detecting means for detecting a luminance signal delivered from the image forming means, caluculating means for setting a level of luminance for the entire display screen on the basis of the detected luminance signal, and feedback means for setting a level of luminance for the image forming means.

According to another of its aspects, the present invention provides a light guide type display apparatus wherein a plurality of image forming means are driven in parallel; display data for the plurality of image forming means are distributed to each image forming means in the form of serial data; and display data for the plurality of image forming means are given from an image memory device.

According to another of its aspects, the present invention provides a light guide type display apparatus wherein the image forming means comprises a light source and a light shutter. The incident angle of light which is applied to the optical fibers from the light shutter is within $30°$, and the incident angle of light from the light source which enters the light shutter is set at an angle at which the maximum contrast of the light shutter is obtained. The optical path length from the light shutter to the optical fibers is equal to or less than a value obtained by dividing the picture element length by tan $\theta$.

The optical fibers include optical fibers which are used to align the light shutter.

According to another of its aspects, the present invention provides a light guide type display apparatus wherein a light guide is used to optically connect together the light source and the image forming means.

### BRIEF DESCRIPTION OF THE DRAWINGS

The above and other objects, features and advantages of the present invention will become more apparent from the following description of the preferred embodiments thereof, taken in conjunction with the accompanying drawings, in which like reference numerals denote like members, and of which:

Fig. 1 is a perspective view showing the general arrangement of the light guide type display apparatus according to the present invention;

Fig. 2 is a perspective view of one block of the light-guide type display apparatus;

Fig. 3 shows the structure of the end of each fiber shaped so as to have a rectangular cross-section;

Fig. 4 shows the arragement of picture elements on the light shutter;

Figs. 5(a) and 5(b) are enlarged views of a part of the display screen;

Fig. 6 is a sectional view of the joint of the light shutter and the fiber bundle;

Fig. 7 is an enlarged view of the joint of the light shutter and the fiber bundle;

Fig. 8 is a sectional view of the joint of the etched light shutter and the fiber bundle;

Fig. 9(a) is a sectional view of an arrangement wherein the LCD is diagonally coupled to the incident end of the fiber bundle;

Fig. 9(b) is a sectional view of an arrangement wherein light from the light source is made diagonally incident on the LCD;

Fig. 10 is a perspective view of an incident end face defined by a plurality of LCDs which are coupled to the fiber bundle;

Fig. 11 is an exploded perspective view of an LCD whioh is employed to constitute a light shutter in the embodiment 1;

Fig. 12 is a connection diagram showing a plurality of LCDs which are interconnected in both the directions X and Y as if they were a signal LCD;

Fig. 13 is a connection diagram showing a plurality of LCDs each of which is provided with both X- and Y-shift registers to reduce the number of interconnections required to connect together the light shutter and an external circuit;

Fig. 14 is a block diagram showing a driving circuit which may be employed in the case of using a plurality of TFT-LCDs;

Fig. 15 shows an arrangement which may be employed in the case where display data is sent to a plurality of LCDs in parallel;

Fig. 16 is a circuit block diagram of an arrangement wherein a plurality of TFT-LCDs are employed;

Fig. 17 is a perspective view showing the joint of the light shutter and the fiber bundle;

Fig. 18 shows the structure of the joint of the light shutter and the light source;

Fig. 19 is a sectional view of the light generating section of another example of the light source;

Fig. 20 is a perspecive view schematically showing light guide type display apparatus according to the embodiment 2;

Fig. 21 shows the arrangement of the liquid crystal projector;

Fig. 22 shows the arrangement of a color projector;

Fig. 23 shows an arrangement which may be employed in the case where the fiber bundles are interlaced with each other at random;

Fig. 24 is a perspective view showing the general arrangement of the light guide type display apparatus according to the embodiment 4;

Fig. 25 is a partially cut-away perspective view of one unit of the light guide type display apparatus according to the embodiment 4;

Fig. 26 is a block diagram of a luminance control circuit;

Fig. 27(a) is a sectional view showing an arrangement which may be employed in the case where the entire display screen is enlarged in a lump;

Fig. 27(b) is a sectional view showing an arrangement which may be employed in the case where the display screen is divided into units;

Fig. 28 is a perspective view of the joint of a fiber bundle which constitutes one unit;

Fig. 29 shows the arrangement of a unit wherein a plurality of LCDs are respectively employed for the three colors, i.e., R, G and B; and

Fig. 30 is a partially cut-away perspective view of one unit of a light guide type display apparatus having an image forming optical system.

## DESCRIPTION OF THE PREFERRED EMBODIMENTS

The present invention will be described hereinunder in detail with reference to the accompanying drawings.

[Embodiment 1]

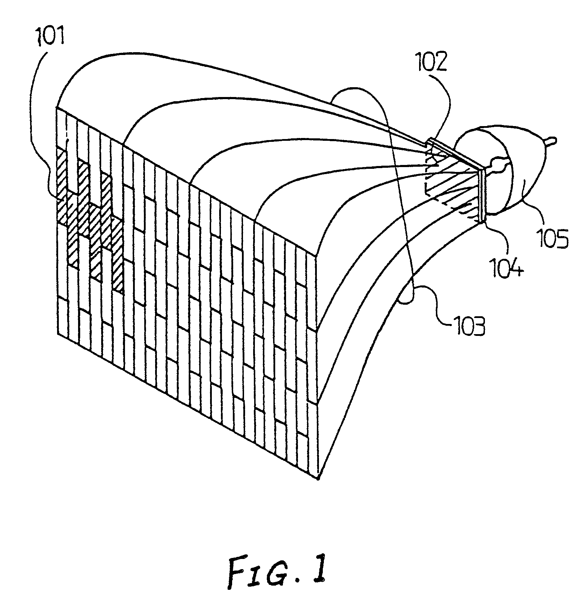

Referring first to Fig. 1, which is a perspective view showing the general arrangement of the light guide type display apparatus according to the present invention, the reference numeral 101 denotes one block that constitutes a part of a screen. The blocks 101 are effectively interlaced with each other at the image output end of a light guide 103 that defines the screen. The reference numeral 102 denotes an image input end defined by the other end face of the light guide 103. The numeral 104 denotes a light shutter which serves as an image forming means. In this embodiment, a liquid crystal display (hereinafter referred to as "LCD") is employed as the light shutter 104. The reference numeral 105 denotes a light source.

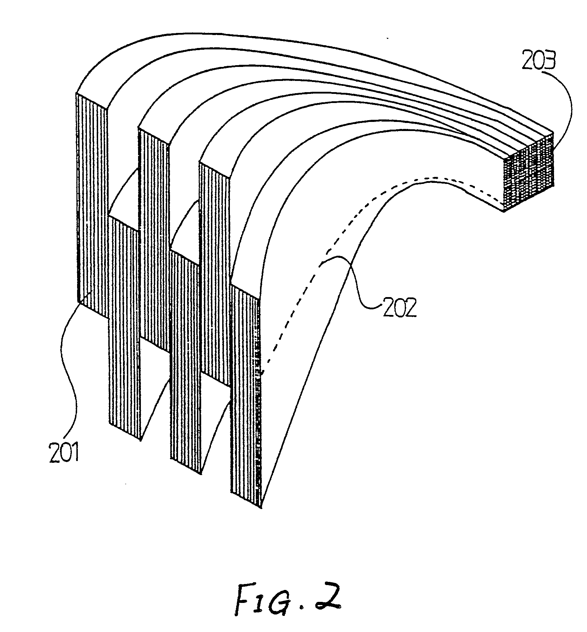

In the present invention, the light guide 103 is used to transmit light flux , and each light guide member defines one picture element at its exit face. Optical fibers are suitably used as these light guide members. Plastic fibers are even more preferable from the viewpoint of weight, cost, flexibility and formability. Fig. 2 is a perspective view of one block which comprises optical fibers of the type described above. Fiber bundles 201 each consisting of a bundle of 30 sheets (each sheet consisting of 180 fibers 202) are alternately shifted so that the exit faces of these fiber bundles 201 are regularly interlaced with each other. On the other hand, the fiber bundles 201 are not shifted at their incident faces which are attached to the light shutter, so that it is possible to define an incident face 203 having a rectangular cross-section. The rectangular incident face 203 faces the corresponding block of the display surface of the light shutter. Accordingly, pieces of information which are made incident on the fiber bundles 201 from the light shutter are reversely shifted in accordance with the shift at the exit face of the light guide, thereby enabling the information to be displayed normally.

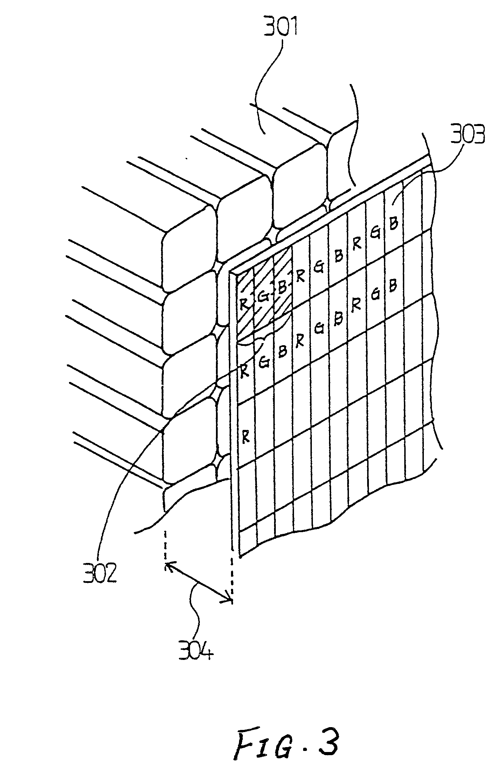

It is possible to define the incident face 203 by a multiplicity of closely stacked fibers 302 each having a rectangular end, as shown in Fig. 3. Although in practice the fibers and the light shutter are in close contact with each other, in Fig. 3 they are illustrated with a spacing 304 provided therebeteen. The cross sectional configuration of each fiber 301 is designed so that one fiber corresponds to one trio 302 of picture elements R, G and B of the light shutter. In this embodiment, these fibers are bundled together to form a block as shown in Table 1 below.

## Table 1

| Fibers | plastic fibers outer diameter: 0.5 mm |
|---|---|
| Exit face | linear magnifying power with respect to incident face: 5:1 1/2 shift; RGB mixed transmission |
| Incident face | rectangularly compression-formed fiber |

bundle; rectangular cross-section

Number of pixels        180 x 180 (units of trio of R, G and B)

Number of fibers        180 x 180

_____

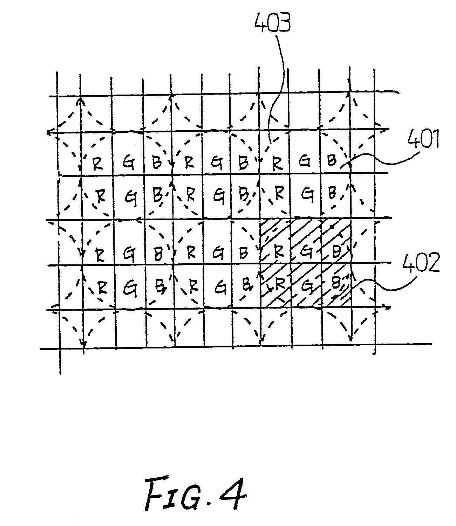

Although a striped color filter 303 is employed in the example shown in Fig. 3, a mosaic color filter may also be employed since it is only necessary for a trio of R, G and B to correspond to each fiber. The cross-sectional configuration of each fiber is not necessarily limited to a rectangular shape but other cross-sectional configurations may also be empoyed, although in such a case the efficiency becomes low. It is also possible to allow one fiber to correspond to a multiplicity of picture elements. Fig. 4 shows one arrangement which may be adopted in such a case. If, for example, a group (hatched portion) 402 of about six picture elements 401, i.e., two trios of R, G and B, is arranged to correspond to one fiber (shown by the broken line) 403, pieces of information which are assigned to about six picture elements are added together at the exit face of each fiber. Accordingly, even if information assigned to one or two of the six picture elements is lacking, there is no fear of specific color information completely lacking for the picture element defined by the exist face of the fiber concerned, so that it is possible to minimize degradation resulting from lack of a part of information. The light shutter in this case is arranged such that the same information is assigned to each pair of picture elements R, G and B, thereby enabling reduction in the amount of information which needs to be displayed per LCD.

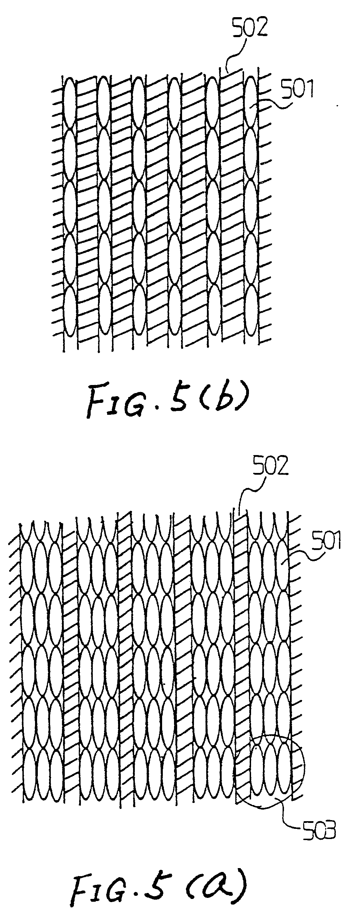

Figs. 5(a) and 5(b) are enlarged views of a part of the display screen. Fibers 501 are clamped between spacers 502 in such a manner that the respective exit faces are aligned with each other. Fig. 5(a) shows an arrangement in which each row of fiber trios 503 of R, G and B is clamped by a pair of spacers 502, while Fig. 5(b) shows another arrangment in which each row of fibers R, G and B is clamped by a pair of spacers 502. The spacers 502 are designed so as to absorb light in order to minimize the interference between light leaking out from the fibers. For this purpose, the spacers were experimentally dyed various colors to find an optimal color. As a result, it was revealed that black was the most preferable. Dying the spacers in this way also makes inconspicuous the gaps produced on the display screen due to magnification, so that it is possible to improve the clearness of the displayed image.

To magnify an image using a light guide optical system that employs fibers, it is possible to appropriately use one of the known methods, e.g., a method wherein a spacer is interposed between each pair of adjacent rows of fibers and another method is oblique cutting. In this embodiment, the image formed by the light shutter is magnified both horizontally and vertically by interposing spacers and employing the cutting method, respectively, as shown in Figs. 5(a) and 5(b), and blocks each formed in this way are stacked to form the entire screen, as shown in Fig. 1. To improve the uniformity of the exit faces of the fibers, it is preferable to subject the exit faces in a lump to a process for controlling the light exit direction. There are various known processes for controlling the exit direction, for example, saw-tooth finishing, satinizing and sandblasting. In this embodiment, the exit faces of the fibers are subjected in a lump to sandblasting to thereby carry out a diffusion treatment therefor.

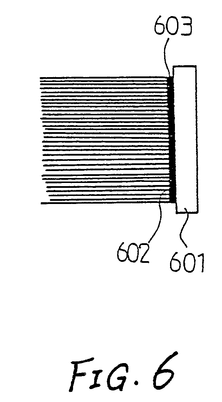

The following is a description of coupling of the light shutter and the incident face of the fiber bundle. Fig. 6 is a sectional view of the joint of the light shutter and the fiber bundle. In order to minimize the unnecessary reflection by the interface between the light shutter 601 and the fiber incident end 602, in this embodiment the fiber bundle and the light shutter are tightly coupled together by means of an optical coupling material 603 having a refractive index which is substantially equal to that of the cores of the fibers, thereby enhancing the coupling efficiency. More specifically, a silicone resin material having a refractive index of 1.49 is employed in this embodiment.

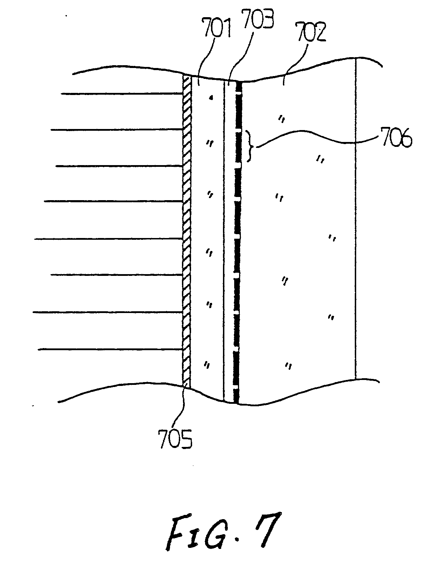

Fig. 7 is an enlarged view of the joint of the light shutter and the fiber bundle. The LCD that is employed to constitute the light shutter comprises an opposing transparent substrate 701 having electrodes, a liquid crystal layer 703 and a transparent substrate 702, which are disposed in the mentioned order from the side of the LCD which is closer to the fiber bundle. The LCD is coupled to the incident face of the fiber bundle by means of a coupling material 705. The reference numeral 706 denotes electrodes corresponding to the picture elements. Since the opposing substrate 701 is interposed between the picture elements and the fiber incident face, the distance for optical coupling is increased and there is therefore a fear that pieces of light information which are formed by the picture elements will not be transmitted to the fibers in one-to-one correspondence. The angle 8 at which light can enter the fiber bundle is determined by the N.A. of the fibers employed. The angle $\theta$ for ordinary plastic fibers is about $\pm30°$. In the case where the direction of the illuminating light has a divergent angle greater than $\theta$, the size of cross talk from neighboring picture elements increases in proportion to the optical path length between each picture element and the corresponding fiber incident end. When the optical path length exceeds a value obtained by dividing the picture element length by $\tan\theta$, pieces of information which are assigned to neighboring picture elements are mixed with each other, resulting in lowering of the resolution. Therefore, in the example shown in Fig. 7, the opposing substrate 701 is made thin, that is, the thickness thereof is set so as to be equal to or smaller than the picture element length, thereby reducing the cross talk which may occur at the area between the picture elements and the incident end of the fiber bundle. In an arrangement wherein a polarizer is needed at the emergent end as in the case of the twisted nematic mode (hereinafter referred to as "TN mode"), a polarizer which is as thin as possible is interposed between the transparent substrate and the fiber bundle.

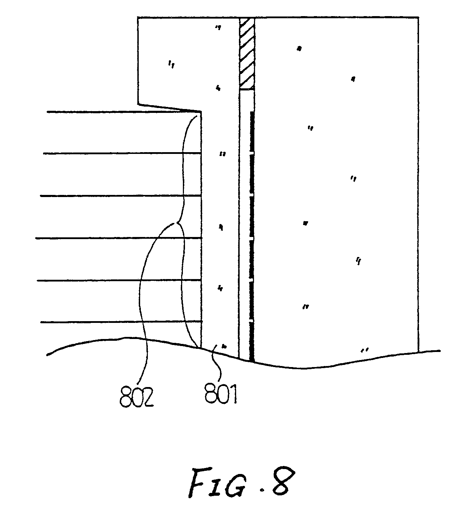

Further, the lowering in the resolution due to the cross talk between picture elements which are adjacent to each other is minimized by disposing a G picture element, which includes luminance information the most, in the center of each incident fiber, or avoiding disposing a G picture element at the periphery of the fiber. Reduction of cross talk can also be realized by other methods. For example, referring to Fig. 8, which shows another method of lowering cross talk, an opposing transparent substrate 801 is etched in conformity to the joint 802 of the fiber bundle so that the thickness of the transparent substrate 801 is smaller than the cross-sectional length of the fibers, thereby obtaining advantages similar to those in the case of using a thin transparent substrate. The arrangement that uses the transparent substrate 801 is even more advantageous from the viewpoint of the structural strength.

The optical coupling of the light shutter and the fiber bundle necessitates accurate alignment, as will be understood from Figs. 6, 7 and 8, so that it cannot be readily conducted. In the case where the light shutter is slanted with respect to the coupling end of the fiber bundle as described later, even if the end faces of the bundled fibers and the picture elements of the shutter are planarly aligned with each other, a gap is generated and therefore the light shutter and the fiber bundle are not completely coupled together. It is further difficult to effect optimal alignment while taking into consideration the gap generated between the light shutter and the end of the fiber bundle.

In this embodiment, the difficulty in effecting the alignment is lessened as follows.

First of all, alignment marks are put to the optical shutter in advance. For example, in the case of an optical shutter with color filters, additional color filters are prepared together with those which are originally provided in such a manner that the color filters serving as alignment marks are formed so as to have a color different from those of the other portions by, for example, laying G and B or R and B one upon the other, each of these alignment marks being formed with a size corresponding to the size of one fiber. It is also possible to employ a black mask for preventing leakage of light or to process the surface of the optical shutter so as to scatter or absorb light by etching or other similar means.

On the other hand, optical fibers which are to be connected to the light shutter are arranged such that two or more fibers which are irrelevant to image formation are bundled together with the other fibers so that the extra fibers are disposed on a diagonal line, and the fibers other than the extra fibers are coupled to the exit end. At the time of alignment for coupling together the light shutter and the fibers, reference light is made incident on the fibers irrelevant to image formation from their end faces which are not coupled to the light shutter, thereby allowing these extra fibers to serve as lighting alignment marks on the fiber side which correspond to the alignment marks on the light shutter in one-to-one relation.

It is possible to effect alignment without much difficulty by aligning the alignment marks on the light shutter with those on the fiber input end while detecting the above described reference light through the panel of the light shutter. It is even easier to effect alignment by employing a photodetector to detect the reference light, the photodetector being designed so as to be sensitive to either light passing through the light shutter or light not passing therethrough.

By virtue of the above-described arrangement, the direction of coupling and the optical path of the reference light are the same and it is therefore possible to effect alignment with ease in regard to any direction of coupling of the light shutter and the fibers.

There is another method of effecting alignment wherein either convexity or concavity each of which substantially corresponds to one fiber are formed on the surface of the light shutter which is to be coupled to the fiber bundle by etching, application or thick-film printing, while the end faces of the fibers are processed so as to be concave or convex in complementary relation, and the light shutter and the fiber bundle are aligned in such a manner that the concave or convex end of the fibers are matched with the the light shutter. This method also enables easy alignment. In this case, it is necessary to accurately locate the positions where alignment is to be effected in the state of design.

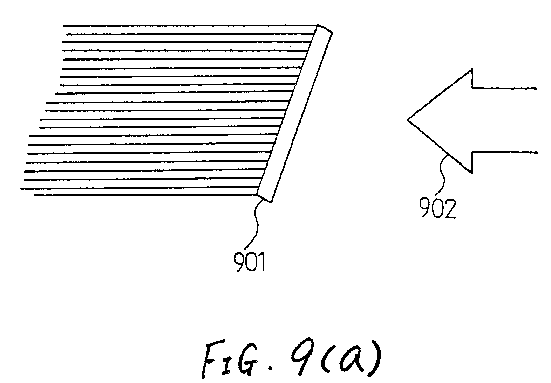

The oblique coupling of the LCD and the fiber bundle will next be explained. Fig. 9(a) is a sectional view showing an arrangement wherein an LCD 901 is obliquely coupled to the fiber incident end, while Fig. 9(b) is a sectional view showing another arrangement wherein light from the light source is made obliquely incident on the LCD 901. Although a light shutter such as an LCD has a change in the display contrast in accordance with the direction of the incident light 902, such a light shutter can be used at an angle at which the maximum contrast is obtained by coupling the light shutter to the fiber bundle at an angle other than right angles or changing the incident angle of the light emitted from the light source, as illustrated. This applies to TN mode, electrically controlled birefringence mode, guest host mode, etc. By making the light obliquely incident on the LCD, the performance in each mode can be utilized to the full. In the case of TN mode that is employed in this embodiment, there is an optical switching direction which is most suitable for the pre-tilt direction of the liquid crystal molecules; therefore, the LCD is coupled to the fiber bundle at a tilt so that light exits in the optimal direction. In ordinary TN mode, it is preferable that the LCD have a tilt of about 0 to 30° with respect to the central angle of the incident light. In this embodiment, the incident angle is set within the range of from 0 to 30° on the basis of the angle determined by N.A. and the aforementioned resolution.

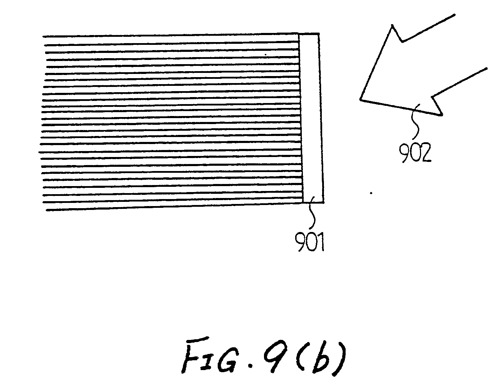

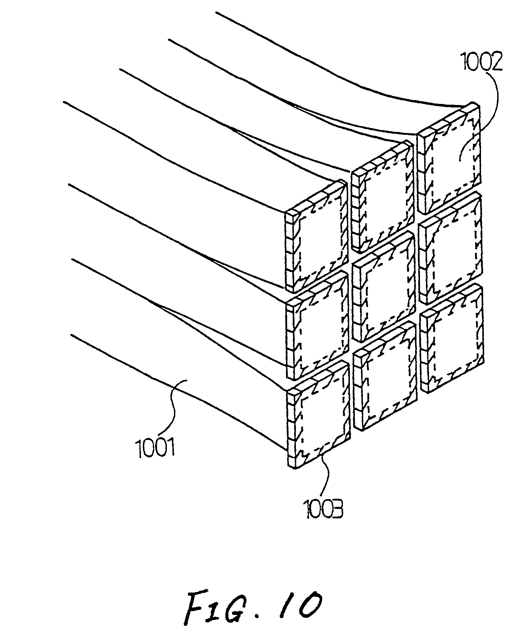

Fig. 10 is a perspective view of an incident face which is defined by a plurality of LCDs each coupled to a fiber bundle. The fiber incident end is divided into a plurality of units 1001 each of which is coupled to a small-sized LCD 1002. In this case, a single light source is employed to illuminate all the units in a lump to thereby enable prevention of nonuniformity which would otherwise be caused by variations in light intensity of a plurality of light sources. The illustrated arrangement has the merits that it is possible to reduce the size of the light shutter and it is also easy to ensure the space for mounting the light shutter. The reference numeral 1003 (hatched portion) in Fig. 10 denotes a driver circuit board for driving each LCD. Since the driver circuit boards 1003 are disposed in the space between the units 1001, there is no adverse effect on the display.

In the case of this embodiment, at least about 500 x 500 picture elements are required to handle TV signals. The above described unitization enables use of a small-sized LCD that has about 100 x 100 picture elements. It also becomes easy to ensure a space for installing circuits for inputting electric signals for control.

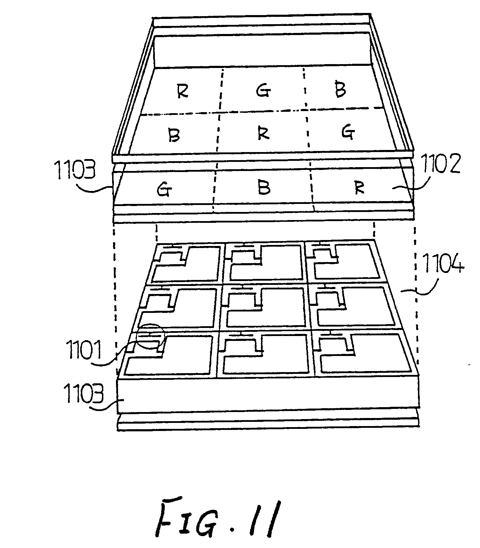

Fig. 11 is a sectional view of an LCD which is employed as the light shutter in this embodiment. The basic structure is such that a color filter layer 1102 is disposed between two transparent boards 1103 having electrodes and a liquid crystal 1104 is enclosed therebetween. This embodiment employs an active matrix type LCD (shown in Table 2) which uses thin film transistors 1101 as active elements (this LCD hereinafter being abbreviated as "TFT LCD"). The method of driving the TFT-LCD and the arrangement thereof are based on those which are stated in "Nikkei Electronics" No 351 (1984), p.211, SID'83 DIGEST, p.156 (1983), and SID'85 DIGEST, p.278 (1985).

Table 2

| Display mode | TN mode |
|---|---|
| Driving method | TFT active matrix |
| Number of pixels | 480 x 440 |
| Effective display area | 96 x 88 mm |
| Color filter | RGB dichroic filter |

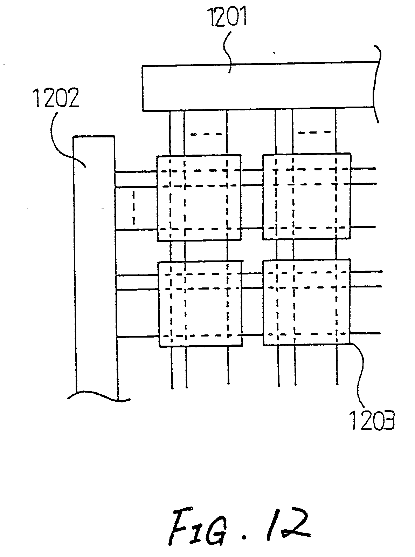

A driving method which may be adopted in the case of employing a plurality of LCDs will next be explained. Fig. 12 shows the simplest driving method wherein a plurality of LCDs are connected in both the directions of X and Y as if they were a single LCD. The reference numeral 1203 denotes LCDs, 1201 an X scanning circuit, and 1202 a Y-scanning circuit.

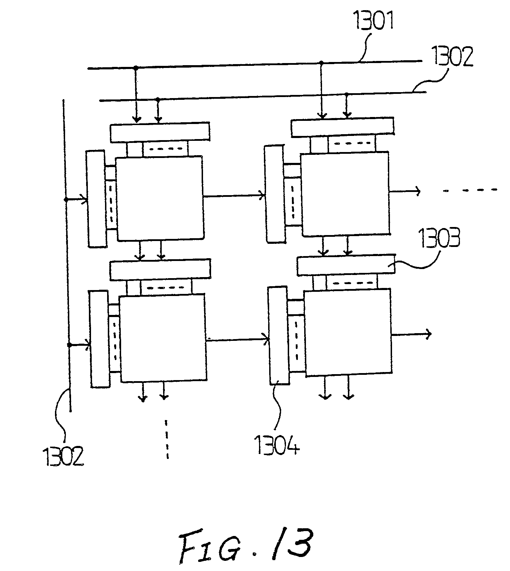

Fig. 13 shows an arrangement wherein an X-scanning circuit 1303 and a Y-scanning circuit 1304 are arranged for each LCD and interconnections to each LCD are reduced to only two, that is, an interconnection for display data 1301 and an interconnection for a timing signal 1302 which corresponds thereto, in order to reduce the number of interconnections required between the LCDs and an external circuit. In this method, each LCD stores data for 1 line and selection of Y-lines is carried out in parallel. Thus, it is possible to set LCDs so that the duty ratio per picture element of each LCD is not raised, and hence possible to avoid lowering in the LCD multiplexing characteristics.

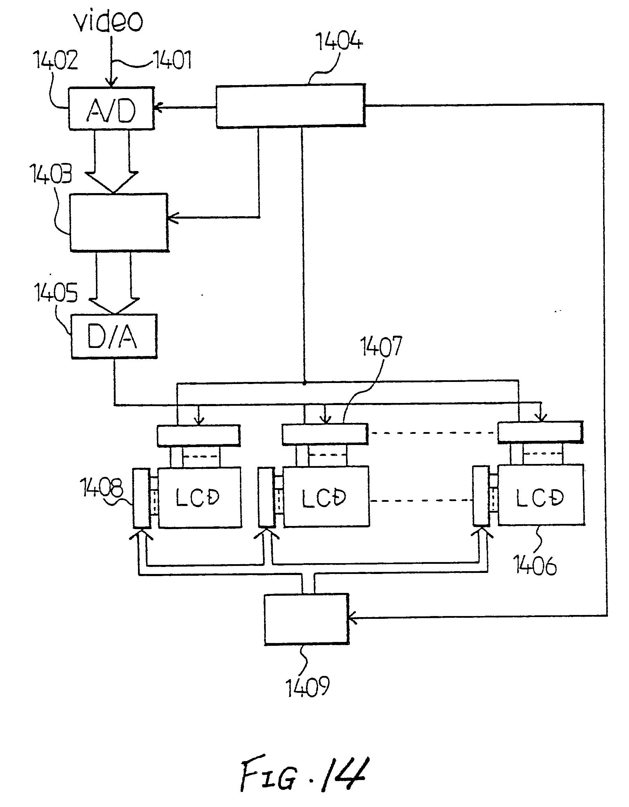

In the present invention, any type of LCD is usable, provided that it is capable of forming an image in a matrix pattern. In this embodiment, TFT-LCDs are employed. Fig. 14 is a block diagram of a driving circuit which may be employed in the case of using a plurality of TFT-LCDs. A video signal 1401 is converted into digital data in an A/D converter 1402 and stored in a frame memory 1403. The reference numeral 1404 denotes a timing generator which generates and outputs timing signals to the A/D converter 1402 and the frame memory 1403. Display data which is output from the frame memory 1403 is converted back to analog data in a D/A converter 1405. This analog display data is transferred to each TFT-LCD 1406 in response to a select timing signal. Each TFT-LCD is provided with an X-scanning circuit 1407 having an analog data latch which latches data for 1 line corresponding to a display region. The latched data is transferred to a selected Y-line in response to a Y-timing signal. This operation is conducted by each Y-scanning circuit 1408. The selection of Y-lines may be effected by either a method wherein Y-lines in a plurality of TFT-LCD are selected sequentially or a method wherein the respective Y lines of the TFT-LCDs are selected in parallel. The latter method is advantageous in that it is possible to obtain a relatively long period of time during which each Y-line is in a select state and that it is possible to reduce the number of interconnections to the LCDs. The reference numeral 1409 in Fig. 14 denotes a Y timing setting circuit.

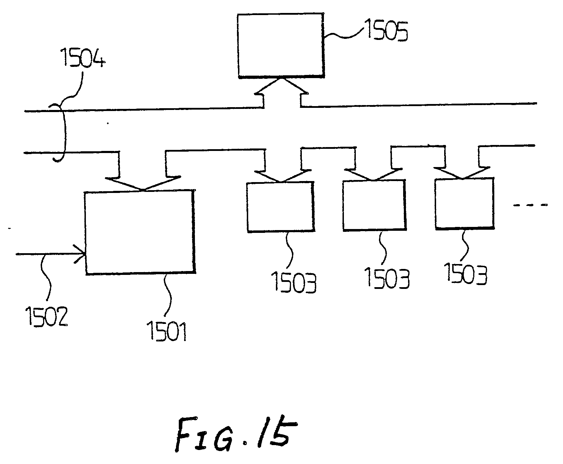

Fig. 15 shows an arrangement wherein display data is sent to the LCDs in parallel. More specifically, data 1502 which is serially transmitted in temporarily stored in a display memory 1501 and the stored data is read out in parallel in accordance with the assignment to each LCD 1503 and then written as display data for each LCD 1503. The reference numeral 1504 denotes a data bus, and 1505 a CPU for effecting control.

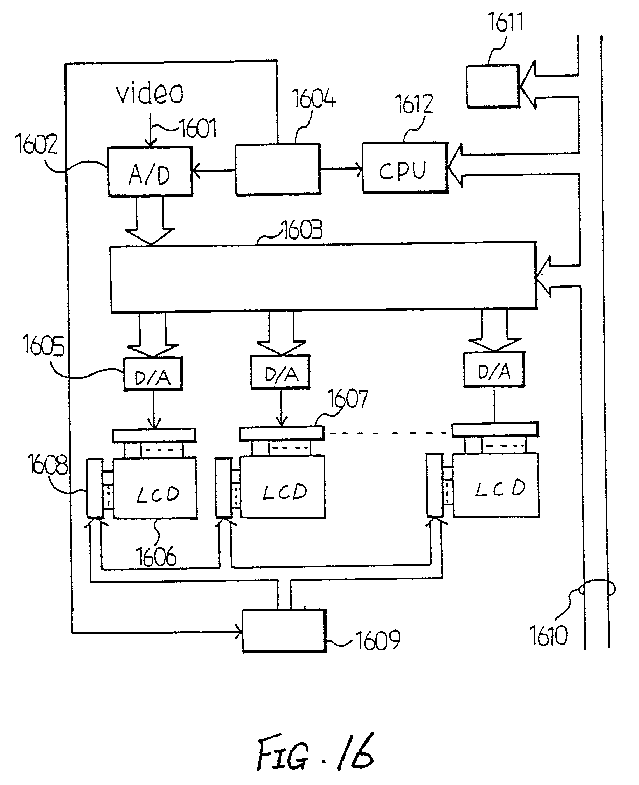

Fig. 16 is a circuit block diagram of an arrangement which may be employed in the case where TFT-LCDs are used to constitute a matrix LCD to effect parallel transmission of data. A video signal 1601 is converted into digital data in an A/D converter 1602 and stored in a frame memory 1603. The reference numeral 1604 denotes a timing generator for generating timing signals. Display data which is output from the frame memory 1603 is converted back to analog data in D/A converters 1605 and transferred to respective TFT-LCDs 1606. Addresses used at the time of reading are determined according to a program which is stored in a memory 1611 in advance. The reference numeral 1612 denotes a microcomputer for controlling the frame memory and the program memory. The numeral 1610 denotes an address bus for transmitting signals for controlling the frame and program memories. Each TFT-LCD is provided with an X-scanning circuit 1607 having an analog data latch which latches data for 1 line corresponding to a display region. The latched data is transferred to a selected Y-line in response to a Y-timing signal. This operation is conducted by each Y-scanning circuit 1608. The selection of Y-lines may be effected by either a method wherein Y-lines in a plurality of TFT-LCDs are selected sequentially or a method wherein the respective Y-lines of the TFT-LCDs are selected in parallel. The latter method is advantageous in that it is possible to obtain a relatively long period of time during which each Y-line is in a select state and that it is possible to reduce the number of interconnections to the LCDs. The reference numeral 1609 in Fig. 16 denotes a Y-timing setting circuit. This method has the merits that the number of interconnections to the LCDs is reduced and it is possible to raise the LCD operating duty and hence possible to lengthen the select time per picture element.

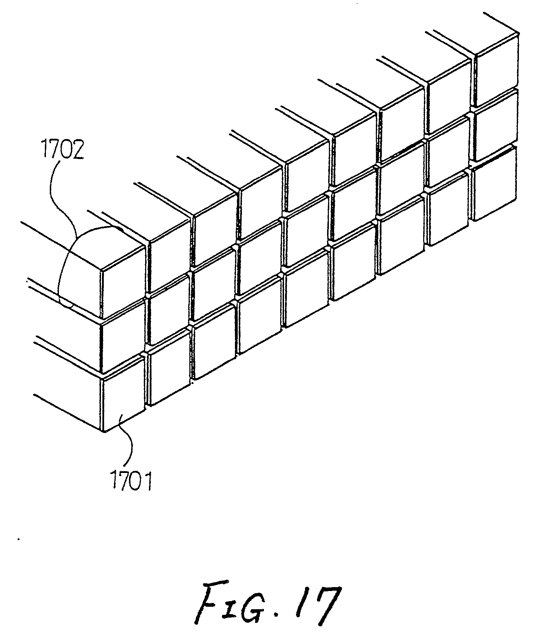

Employment of a plurality of LCDs in this way enables the aspect ratio of the light shutter to be determined independently of the aspect ratio of the displayed image. Accordingly, it is possible to drive the light shutter at an operating duty at which excellent electrooptic characteristics of LCDs are available. Fig. 17 is a perspective view of the joint of the light shutter and the fiber bundle, which shows one example of the above-described arrangement. An NTSC television signal for 540 x 540 trios of picture elements R, G and B is formed using 27 TFT-LCDs 1701 having 180 x 180 picture elements. The reference numeral 1702 denotes a fiber bundle which correspondes to one LCD. Accordingly, one LCD is in charge of 180 x 60 trios of picture elements R, G and B.

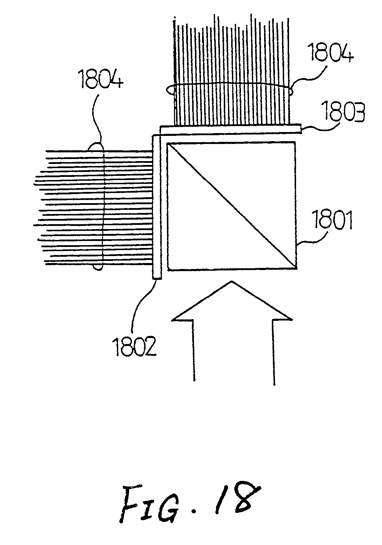

Fig. 18 shows the structure of the joint of the light shutter and the light source in this embodiment. It is general practice to employ a polarizer in order to limit the plane of polarization of incident and exit light relative to the liquid crystal panel; in this embodiment, a polarization beam splitter 1801 is employed to limit polarization of incident light and liquid crystal panels 1802 and 1803 having no upper polarizing plate are employed for two light beams exiting from the polarization beam splitter 1801 each of which has been limited to one plane of polarization, thus constituting a light shutter. The reference numeral 1804 denotes fiber bundles. This arrangement enables effective use of light in comparison with the existing liquid crystal displays wherein only one or the other of the two polarized light components is used and the unused polarized light component is discarded by being absorbed by the polarizer. It is therefore possible to reduce the power of the light source to about a half of that which has heretofore been employed. Accordingly, it is possible to reduce the overall size of the apparatus and lower the rate of power consumption as well as reduce the load on the means for cooling the apparatus by an amount corresponding to the quantity of heat generated by the light which would otherwise be absorbed by the polarizer. Thus, it is possible to overcome the problem that it is impossible to reduce the overall size of the apparatus due to generation of heat and eliminate the need to provide a large-sized cooling means. By virtue of these advantages also, it is possible to reduce the size of the apparatus and lower the power consumption.

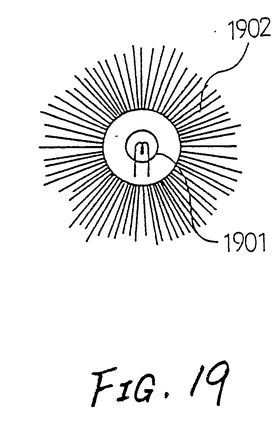

It is also possible to employ a light source which utilizes the advantage of optical fibers that the direction in which light is guided thereby can be changed as desired. Fig. 19 is a sectional view of the light generating section of a light source of the type described above. The reference numeral 1901 denotes a light generating section which is constituted by a halogen lamp, a cold-cathode tube, a fluorescent lamp, or the like, while the numeral 1902 denotes optical fibers for the light source. The respective end of the optical fibers 1902 are arranged such as to be in close contact with each other so that the light emitted from the light source is introduced into the fibers to the full. The other end faces of the optical fibers 1902 are optically coupled to the light shutter which serves as an image forming means. In other words, in this example, a fiber-type light source is employed to constitute the light source shown in Fig. 1. In regard to the material for the fiber light source, quartz glass fibers or the like are employed for a light source having a relatively high calorific power with greater importance being attached to the heat resistance, while plastic fibers are employed for a light source having a relatively low calorific power with consideration given to the cost and weight. In comparison with a combination of a reflecting mirror and a condenser lens or optical fibers which has heretofore been employed, the fiber light source employed in the present invention is produced considerably easily since it needs no complicated optical design and no high accuracy is required to align the light shutter and the light source. In addition, it is unnecessary to take into consideration the lowering in the quantity of marginal rays which frequently occurs in a focusing optical system designed with the cost held down, and the light source still provides high-quality and uniform light. As optical fibers for this light source, those which have a smaller diameter than the size of each picture element on the surface of the light shutter panel are employed and the fibers for the light source are arranged such that a plurality of fibers correspond to each picture element, thereby obtaining a light source which needs no alignment and has reduced differences in light quantity between the picture elements. It is also possible to level differences in light quantity between various portions of the light generating section and thereby reduce the nonuniformity in light quantity by bundling the optical fibers which are taken out from the light generating section such that the optical fibers 1902 are irregularly positioned at the light generating section 1901.

Since the light emitted from the light source thus prepared is superior in uniformity, there is substantially no difference in luminance between the light guide display elements which would otherwise be produced because of the light source. In addition, the light which has heretofore been unused and wasted in the form of heat is effectively utilized, so that there is an improvement in luminance of 30% or more for the same lamp. Accordingly, it is possible to employ a lamp which is smaller than that used in the prior art to produce a light guide type display apparatus having the same level of luminance as that in the prior art. Thus, it is possible to reduce the overall size of the apparatus for the same level of performance due to the reduction in the amount of heat generated, lowering in the power consumption and reduction in size of the power source and the cooling means.

By virtue of the above-described arrangement, it is possible to obtain a light guide type display apparatus in which the boundaries are only slightly observable and it is therefore possible to obtain a uniform and high-quality display.

[Embodiment 2]

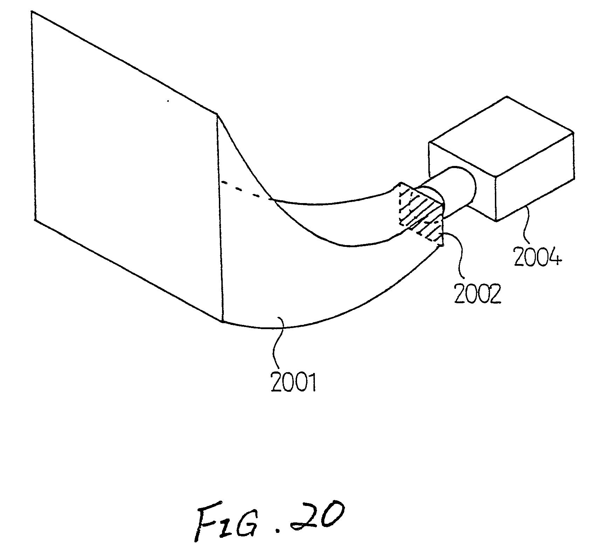

Fig. 20 shows another embodiment of the light guide type display apparatus according to the present invention. The reference numeral 2001 denotes a fiber bundle which constitutes a magnifying optical system, and the numeral 2002 (hatched portion) denotes an image input end which is defined by the other end face of the fiber bundle 2001. The numeral 2004 denotes a liquid crystal projector which serves as an image forming means. This embodiment differs from the embodiment 1 in that the LCD is not directly coupled to the image input end but an image is input through an image forming optical system.

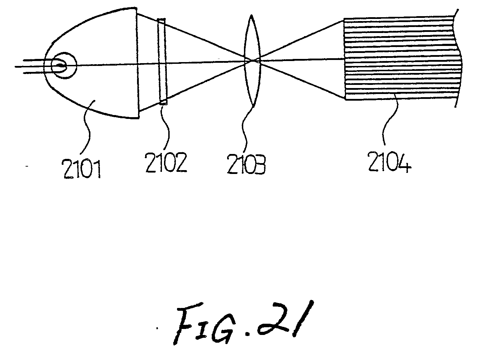

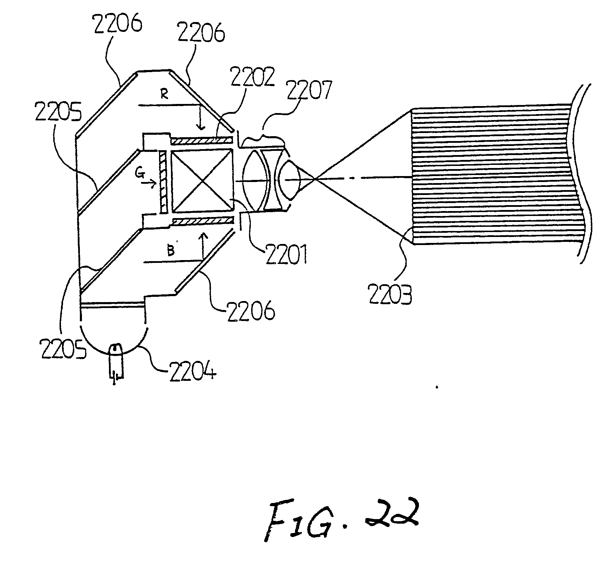

Fig. 21 shows a basic arrangement of the liquid crystal projector employed in this embodiment. The reference numeral 2101 denotes a light source, 2102 an LCD, 2103 a projecting optical system, and 2104 a fiber bundle. Examples of known projectors of this type are (1) a projector that employs a rear projection type optical shutter [see Appl. Phys. Lett. Vol. 21392 (1972)], (2) a projector that employs a reflex light shutter [see Japanese Patent Laid Open No. 56-43681 (1981)], (3) a projector that employs an optically writing light shutter [see Television Society Technical Report OPT-216, January, 1986], and (4) a projector that employs a matrix light shutter [see Japanese Patent Laid-Open No. 61-99118 (1986)]. Any of these projectors is usable in the present invention; however, a color projector (shown in Fig. 22) that employs a TFT-LCD is employed in this embodiment. The color projector, in which the three primary colors are mixed together by means of a dichroic element 2201, enables a brigher display to be obtained since the light utilization efficiency is higher than in the case of using a color filter. Further, a matrix LCD 2202 is projected on an incident face 2203 which is defined by a fiber matrix, thereby enabling accurate alignment of the picture elements. The reference numeral 2204 denotes a light source, 2205 spectroscopic dichroic mirrors, 2206 mirrors, and 2207 a projecting optical system. Since the three primary colors can be made incident on the fiber bundle in a lump, the number of fibers used can be reduced, so that it is possible to reduce the overall length of fibers.

Although the arrangement of the light guide section in the embodiment 2 is similar to that in the embodiment 1, even if the light guide is a simple stack type light guide, it is possible to form an accurate image by means of the projector.

Thus, it is possible to obtain a light guide type display apparatus capable of displaying an image which is brighter and has a higher resolution and better quality by coupling together the image forming section constituted by a light shutter and the fiber bundle through a coupling optical system. It is also possible to lower the fiber cost furthermore.

[Embodiment 3]

The following is a description of the embodiment 3 of the present invention, wherein fibers are interlaced with each other even more random.

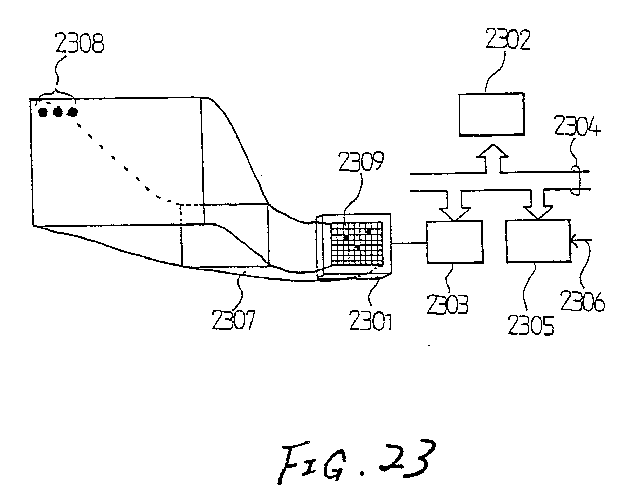

Although in the embodiments 1 and 2 the fibers are shifted with respect to each other by a predetermined amount, in this embodiment they are interlaced even more random. Fig. 23 shows the arrangement of this embodiment. The reference numeral 2301 denotes an LCD for forming an image, 2302 a CPU which scrambles display information for the LCD, 2303 an LCD driving circuit, 2304 a data bus, 2305 an image memory, and 2306 serial data concerning image information. In addition, the reference numeral 2307 denotes an optical inverse transformation matrix element for restoring the image to its previous form.

A specific scramble circuit is arranged to access a dual port memory having a random port according to a transposed matrix defined by an optical inverse transformation matrix. Addresses used at this time are given according to the order previously programmed on the basis of the measured characteristics of the optical inverse transformation matrix. The optical inverse transformation matrix is arranged by interlacing fibers at random. Thus, as shown in Fig. 23, picture elements 2308 which are adjacent to each other on the display screen can be discretely disposed on the incident face, as shown by the reference numeral 2309.

The embodiment 3, in which the arrangement of the fibers is changed by making use of the characteristics of the matrix LCD, enables suppression of the generation of boundaries on the screen on the basis of a particular rule and the generation of unevenness in light quantity on the basis of the intensity distribution in the light generating section.

[Embodiment 4]

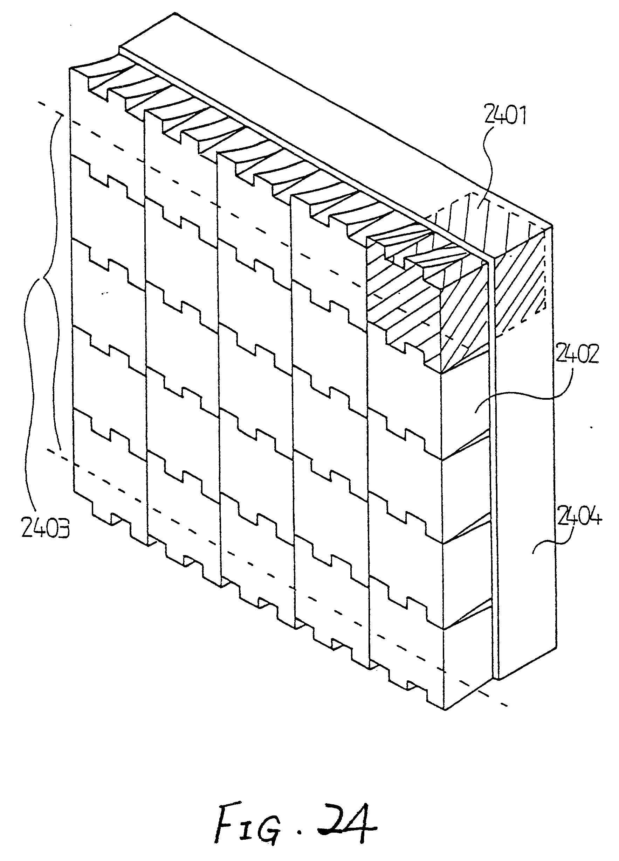

Fig. 24 shows the general arrangement of a furher embodiment of the light guide type display apparatus according to the present invention.

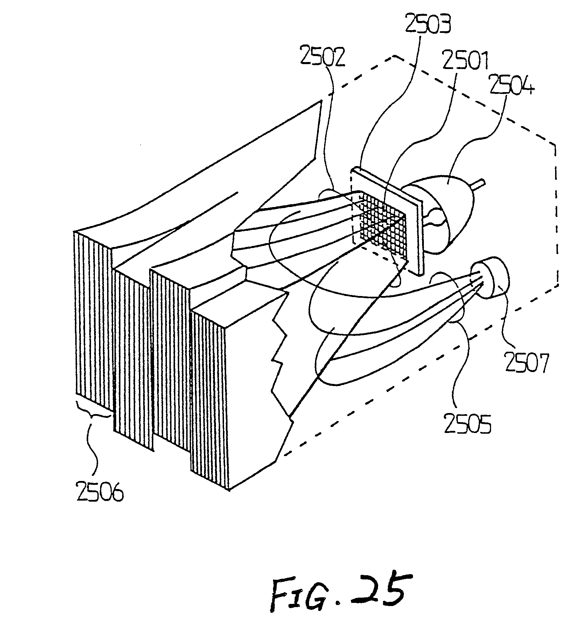

The hatched portion 2401 is one of the units which constitute in combination a display screen. The units 2401 are arranged in such a manner as to be interlaced with each other at the image output end 2402 of the light guide that defines a display screen with a view to improving the uniformity of the screen. The reference numeral 2404 denotes a unit support member which has each unit 2401 accommodated in an insertion space therein. The broken lines 2403 show the upper and lower limits, respectively, of the range within which the units 2401 are actually used to display an image. The areas other than the area which is defined between the broken lines 2403 are masked. Fig. 25 is a partially cut-away perspective view of one of the units constituting the display screen. The reference numeral 2501 denotes an image input end which is defined by the other end face of an optical fiber bundle 2502. The reference numeral 2503 denotes a light shutter which serves as an image forming means. In this embodiment, an LCD is employed to constitute the light shutter 2503. The reference numeral 2504 denotes a light source for projection. The reference numeral 2505 denotes optical fibers for luminance detection which are led out from several points on the display surface. The reference numeral 2507 denotes a luminance detector which receives light through the fibers for luminance detection. In this embodiment, photodiodes are employed to constitute the luminance detector 2507. These luminance detecting means are installed for the purpose of ensuring uniformity of luminance over the whole screen. A level of luminance over the whole screen is set on the basis of signals delivered from the luminance detectors of all the units, and the set level of luminance is fed back to the light source and LCD in each unit to thereby adjust the luminance level. It should be noted that illustration of a light source, control and driving circuits for the LCD are omitted in the figure for simplification.

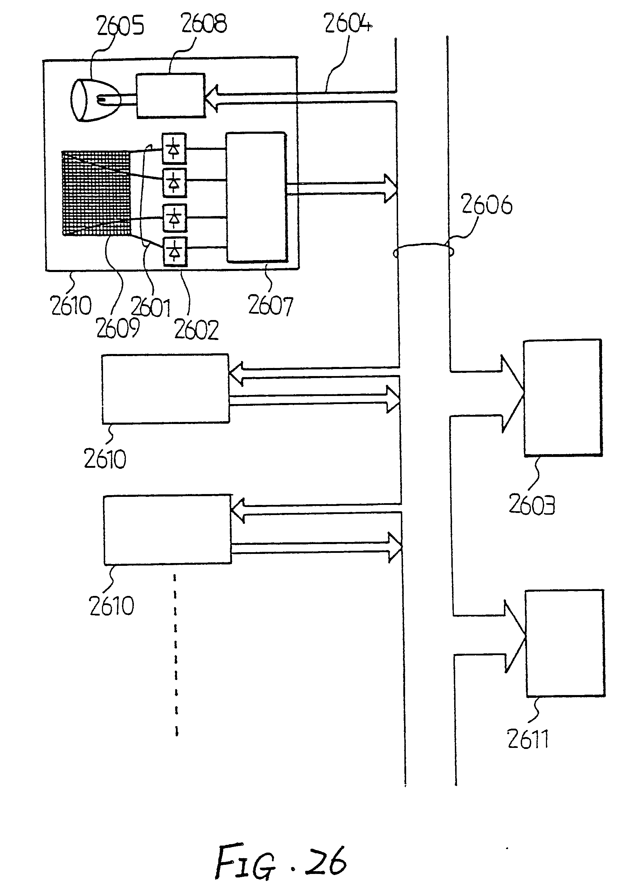

Fig. 26 is a block diagram of a luminance control circuit in this embodiment. In a unit 2610 are installed a luminance detecting means, a light source 2605 which constitutes an image forming means, and a driving circuit 2608 for driving the light source 2605. The luminance detecting means is constituted by the above-described luminance detecting fibers 2601 and photodiodes 2602, while an arithmetic means for calculating a level of luminance for display is constituted by a microcomputer 2603, and a feedback means is constituted by a control line 2604 for controlling the light source 2605 constituting an image forming means. It should be noted that the reference numeral 2609 denotes a fiber optical system and the numeral 2611 denotes a memory for storing a control program and the like. Signals delivered from the photodiodes that constitute in combination a luminance detector are input to an averaging circuit 2607 where they are averaged to obtain average luminance data in regard to the unit concerned, and this average luminance data is sent to a bus 2606. On the basis of this data, the CPU 2603 determines a level of luminance for the entire apparatus according to a program previously set. According to the simplest method, a level of luminance for the entire apparatus is set in conformity with a unit which has the lowest level of luminance. Next, a luminance control signal is sent to the light source driving circuit 2608 through the feedback line 2604. This embodiment adopts the simplest method wherein the level of luminance is changed by controlling the level of power applied to the light source 2605. Thus, it becomes possible to correct the level of luminance by monitoring the level of luminance on the display surface as occasion demands and controlling the level of brightness of the light source which constitutes an image forming means. This method also enables variations inherent in the units to be corrected at the same time.

Although in this embodiment the luminance of the image forming means is controlled by controlling the power applied to the light source, it is a matter of course that the luminance control may also be effected by controlling the electrooptic characteristics of the light shutter or modifying the luminous intensity in the case of a self-emission type light shutter. It is also possible to adopt a method wherein no fibers serving as luminance detecting means are employed but photodiode chips are installed directly on the display surface or the incident surface. The number of luminance detecting means may be changed according to need. Further, the luminance averaging circuit and the method of setting a level of luminance for the entire apparatus are not necessarily limited to those employed in this embodiment, but any type of luminance averaging circuit and any type of luminance setting method may be employed, provided that the circuit and method employed function in the same way as in the embodiment.

As shown in Fig. 25, the light guide that is employed in this embodiment is arranged such that fiber bundles 2506 each formed by bundling 25 sheets (each sheet consisting of 100 fibers) are alternately shifted with respect to each other at their exit ends, whereby the fiber bundles 2506 are interlaced with each other on the exit end face. The exit ends of the fiber bundles 2506 are arranged to project from the unit casing and are firmly bonded together so as to be rigid. On the other hand, the incident end portions of the fiber bundles 2506 which are connected to the light shutter are not shifted but allowed to form a rectangular cross section. The incident face 2501 having a rectangular cross-section faces the display surface of the light shutter. Accordingly, pieces of information which are made incident on the fiber bundles from the light shutter are reversely shifted in accordance with the shift at the emergent end, whereby information is displayed normally. This is achievable because the LCD comprising matrix picture elements enables accurate positioning. The incident face 2501 may be formed by closely stacking fibers each having a rectangular end. The cross-sectional configuration of fibers is designed so that one fiber corresponds to one trio of picture elements R, G and B of the LCD. It is also possible to arrange the fibers such that one fiber corresponds to a multiplicity of picture elements. This arrangement has the advantage that, even if a part of information is lacking, the effect of this defect is relatively small on the output surface, as described above. Thus, it is possible to define the incident face 2501 by closely stacked bundles of fibers each having a rectangular end face. The cross-sectional configuration of the fibers is designed so that substantially one fiber corresponds to one trio of picture elements R, G and B of the light shutter. In this embodiment, these fibers are bundled to form a unit, as shown in Table 3.

## Table 3

| Fibers | plastic fibers |
|---|---|
| | outer diameter: 0.5 mm |
| Exit face | one-dimensional magnifying power with respect to incident face: 5:1 1/6 shift; RGB mixed transmission |
| Incident face | rectangularly compression-formed fiber bundle; rectangular cross-section |
| Number of pixels | 100 x 100 (units of trio of R, G and B) |
| Number of fibers | 100 x 100 |
| Light shutter | matrix LCD 100 x 300 (units of picture element) |
| Light source | 250w halogen lamp |
| Luminance control | feedback control between units |

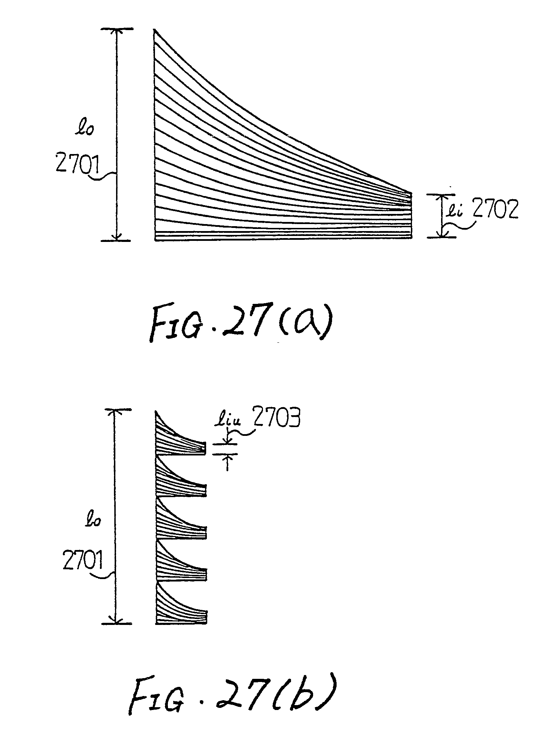

The fiber length in this embodiment will next be explained. Fig. 27(a) is a sectional view showing an arrangement which may be employed in the case where the entire display screen is constructed in a lump, while Fig. 27(b) is a sectional view showing an arrangement which may be employed in the case where the display screen is divided into units. In regard to the ratio of the length $\ell o$ 2701 of the exit face to the length $\ell i$ 2702 of the incident face, in the arrangement shown in Fig. 27(a) it is 5:1, whereas, in the arrangement shown in Fig. 27(b), the ratio of the length $\ell o2701$ to the sum of the lengths $\ell iu$ 2703 of the incident faces of the units is 5:1, which is the same as the above. However, if attention is given to the fiber length, it will be understood that, in the case where the screen is divided into 5 units in the cross-section as shown in Fig. 27(b), the fiber length can be reduced to 1/5 seeing at the plane within the cross-section. In actual practice, the fiber length required can be reduced to about 1/20 since the unitization is achieved also within the plane perpendicular to the cross-section. The reduction in the fiber length leads to not only a reduction in the overall cost of the system but also a reduction in the overall weight which becomes a more serious problem as the size of the apparatus increases.

The unitization also provides the merit that it is possible to reduce the size of LCDs employed. More specifically, at least about 500 x 500 picture elements are required to handle TV signals by way of example, but the above-described unitization enables use of a small-sized LCD that has about 100 x 100 picture elements and also allows employment of low-cost LCDs.

In this embodiment, TFT-LCDs shown in Table 4 are employed.

Table 4

| Display mode | TN mode |
| --- | --- |
| Driving method | TFT active matrix |
| Number of pixels | 100 x 300 |
| Effective display area | 80 x 80 mm |
| Color filter | RGB dichroic filter |

In the case where a plurality of LCDs are employed by virtue of the unitization, these LCDs may be driven by any of the following methods as in the case of the embodiment: i.e., the method wherein the plurality of LCDs are driven as if they were a single LCD; the method wherein each LCD is provided with only an interconnection for display data and an interconnection for a timing signal that corresponds thereto; and the method wherein display data is sent to each LCD in parallel.

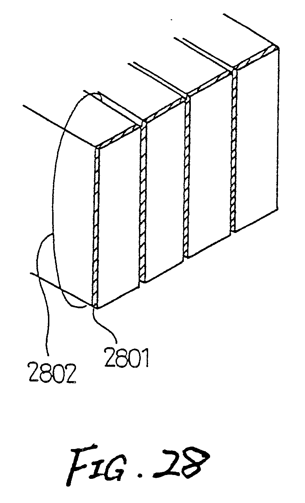

Connnecting together a plurality of LCDs in the manner described above enables a reduction in the number of interconnections used between the units and allows the input/output terminals of the units to be connected to the interconnections of the support member by insertion. Since the size of LCDs can be reduced, it is possible to drive them at an operating duty at which excellent electrooptic characteristics are available. Further, employment of a plurality of LCDs to constitute one unit enables the aspect ratio of the light shutter to be determined independently of the aspect ratio of the displayed image. Fig. 28 is a perspective view of the joint of the fiber bundle which constitutes one unit, which shows one example of the above-described arrangement. A unit that has 100 x 300 picture elements is comprised of four LCDs 2801 each having 100 x 75 picture elements. The reference numeral 2802 denotes a fiber bundle which corresponds to one LCD.

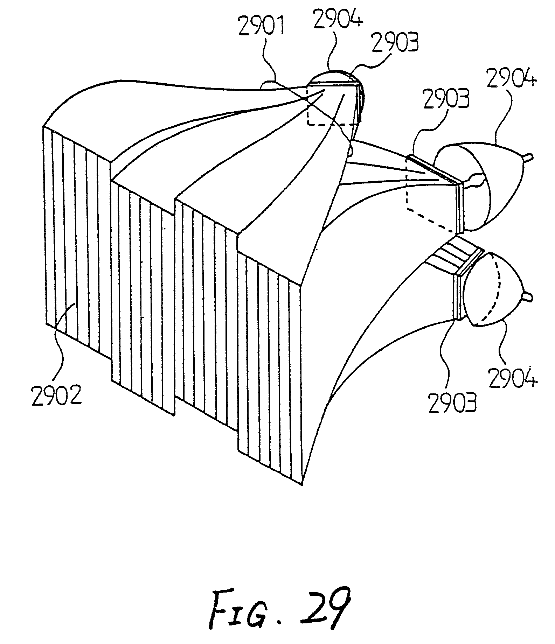

It is also possible to divisionally lead out fiber bundles 2901 from the display surface 2902 of the unit for each of the three colors, i.e., R, G and B, and connect the fiber bundles 2901 to a plurality of LCDs 2903, as shown in Fig. 29. Further, it is also possible to employ a plurality of light sources 2904.

As the light source system, it is possible to employ a polarization beam splitter light source or a fiber light source in the same way as in the embodiment 1.

With the above-described unitized arrangement, it is possible to obtain a high-quality light guide type display apparatus which has the advantages that the fiber length can be reduced, the boundaries are only slightly observable, and a uniform display is obtained.

[Embodiment 5]

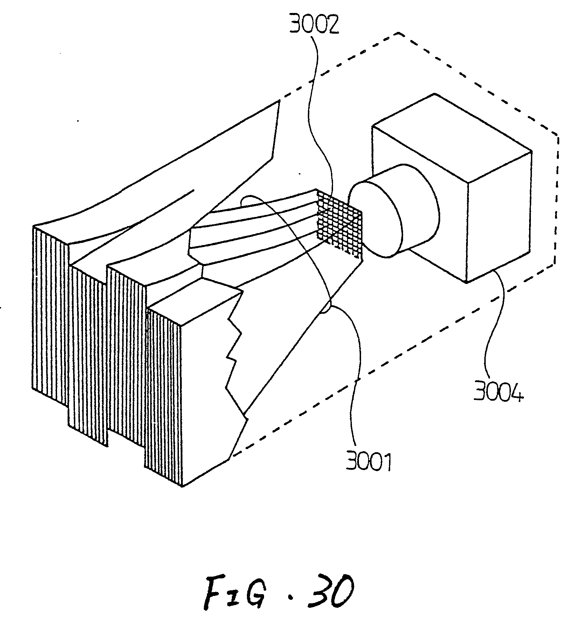

Fig. 30 shows a further embodiment of the light guide type display apparatus according to the present invention. The reference numeral 3001 denotes a fiber bundle which serves as an enlarging optical system within a unit, and the numeral 3002 (hatched portion) denotes an image input end which is defined by the other end of the fiber bundle 3001. The reference numeral 3004 denotes a liquid crystal projector which serves as an image forming means. This embodiment differs from the embodiment 4 in that the LCD is not coupled directly to the image input end but an image is input through an image forming optical system.

The arrangement of the liquid crystal projector that is employed in this embodiment is the same as that in the embodiment 2.

The arrangement of the light guide section is also the same as that in the embodiment 2.

Although the present invention has been described by way of the embodiments, it should be noted here that the present invention is not necessarily limitative to the described embodiments. For example, it is also possible to employ a self-emission type image forming means such as a CRT. Accordingly, the present invention may be widely applied to light guide type display apparatuses.

Thus, the present invention enables the boundaries between the blocks of the display screen to be made only slightly observable and hence allows achievement of a light guide type display apparatus which provides a uniform and high-quality display by effectively interlacing optical fibers that optically couple together a light shutter and a display screen.

As has been described above, it is possible according to the present invention to reduce the amount of fibers used and hence lower the cost of the system as well as reduce the size (thickness) and weight of the apparatus by forming a display screen from a plurality of units. Since standardized production can be conducted, it is possible to lower the production cost. It is also possible to cope with any desired size of the system by appropriately selecting the number of units used. When a failure occurs, a defective portion is readily repaired by removing the units, and replacement is also facilitated. Thus, maintainability is improved. In addition, it is possible to employ a light source and a light shutter which have smaller sizes than those employed in the prior art. Further, it is possible to control the level of luminance between the units and hence obtain a light guide type display apparatus in which the level of luminance is uniform over the entire display screen and which therefore provides a high quality display.

## Claims

1. A light guide type display apparatus comprising:
image forming means; and
optical fibers for optically coupling together said image forming means and a display screen, said optical fibers being effectively interlaced with each other.

2. A light guide type display apparatus comprising:
image forming means; and
optical fibers for optically coupling together said image forming means and a display screen,
wherein a screen is formed from a plurality of image forming means.

3. A light guide type display apparatus according to Claim 2 which comprises a plurality of units each including image forming means and optical fibers for optically coupling together said image forming means and a display screen.

4. A light guide type display apparatus according to Claim 2, further comprising luminance detecting means for detecting a luminance signal delivered from said image forming means, arithmetic means for setting a level of overall luminance for display on the basis of the detected luminance signal, and feedback means for setting a level of luminance for said image forming means.

5. A light guide type display apparatus according to Claim 2, wherein said plurality of image forming means are driven in parallel.

6. A light guide type display apparatus according to Claim 2, wherein display data for said plurality of image forming means are distributed to each image forming means in the form of serial data.

7. A light guide type display apparatus according to Claim 2, wherein display data for said plurality of image forming means are given from an image memory.

8. A light guide type display apparatus according to Claim 1 or 2, wherein said image forming means comprises a light source and a light shutter.

9. A light guide type display apparatus according to Claim 8, wherein the incident angle of light which is applied to said optical fibers from said light shutter is within $30°$.

10. A light guide type display apparatus according to Claim 8, wherein the incident angle of light from said light source which enters said light shutter is set at an angle at which the maximum contrast of said optical shutter is obtained.

11. A light guide type display apparatus according to Claim 8, wherein the optical path length from said optical shutter to said optical fibers is equal to or less than a value obtained by dividing the picture element length by $\tan \theta$.

12. A light guide type display apparatus according to Claim 8, wherein said optical fibers include optical fibers which are used to align said light shutter.

13. A light guide type display apparatus including a light source, image forming means and a light guide, wherein the improvement comprises a light guide used to optically connect together said light source and said image forming means.

FIG. 1

FIG. 2

FIG.3

FIG.4

FIG. 5 (b)

FIG. 5 (a)

$FIG. 6$

FIG. 7

FIG.8

901

902

$F_IG. 9(a)$

901

902

FIG. 9 (b)

FIG. 10

FIG. 11

FIG. 12

FIG. 13

FIG. 14

FIG.15

FIG. 16

1702

1701

FIG. 17

FIG. 18

FIG. 19

FIG . 20

2101    2102    2103    2104

FIG. 21

FIG. 22

FIG. 23

FIG. 24

FIG. 25

FIG. 26

$$FIG.27(a)$$

$$FIG.27(b)$$

2802    2801

FIG. 28

FIG. 29

3002

3004

3001

FIG · 30